# DEMANDE DE BREVET EUROPEEN

(11) **EP 1 876 558 A1**
(43) Date de publication de la demande: **09.01.2008**
(21) Numéro de dépôt: 07111551.3
(22) Date de dépôt: 02.07.2007
(51) Int. Cl.: G06Q 10/00

(54) **Système de gestion d'un agenda électronique, comprenant des moyens de localisation d'une unité sans fil**

(30) Priorité: 03.07.2006 FR 0652765
(71) Demandeur: Alcatel Lucent, 75008 Paris (FR)
(72) Inventeur: Gaudin, Eric, 92120 Montrouge (FR)
(74) Mandataire: Hedarchet, Stéphane

(57) **Abrégé**

Procédé de gestion d'un agenda électronique, qui comprend les opérations suivantes :
- prise en compte dans l'agenda d'un évènement préenregistré, comprenant des données d'agenda incluant au moins la date et le lieu prévus de l'évènement ;
- à la date prévue de l'évènement, localisation d'une unité sans fil affectée audit agenda ;
- comparaison de la localisation de l'unité sans fil avec le lieu prévu de l'évènement.

## Description

L'invention a trait à la gestion des agendas électroniques.

Les agendas électroniques remplacent peu à peu les agendas papier. Grâce à des fonctionnalités nouvelles qui, réalisées grâce à la programmation informatique, ne peuvent être proposées par les agendas papier, les agendas électroniques tendent à remplacer ces derniers dans la gestion du temps professionnel.

Si l'on exclut les fonctionnalités basiques telles que les couper/copier/coller/déplacer ou les messages de rappel (plus connus sous sa dénomination anglaise *reminders),* l'une des fonctionnalités les plus prisées dans les entreprises est l'agenda partagé. L'agenda, implémenté sur un serveur (appelé serveur d'agenda), regroupe dans ce cas les emplois du temps de plusieurs utilisateurs et peut être consulté/modifié depuis plusieurs postes (en tenant compte des droits d'accès en lecture/écriture).

Pour illustrer l'implémentation d'un agenda partagé, on pourra notamment se référer à la demande de brevet américain publiée sous le numéro US2003/0231647.

Un inconvénient des agendas électroniques implémentés sur serveur est l'impossibilité de tenir compte de la mobilité des utilisateurs. Lorsqu'un utilisateur n'est pas en mesure d'accéder à son agenda (par exemple dans le cas où l'utilisateur est en déplacement), le problème se pose alors du respect par l'utilisateur de son agenda. Les reminders, en particulier, sont émis en vain puisque l'utilisateur absent ne peut en prendre connaissance.

Une manière de remédier - en partie - à ces inconvénients est de munir chaque utilisateur d'un appareil mobile équipé d'outils d'agenda, par exemple un assistant personnel (plus connu sous l'acronyme PDA, de l'anglais *Personal Data Assistant)* ou un Smartphone. Dans ce cas l'utilisateur bénéficie en permanence, et quelle que soit sa localisation, d'un accès à son agenda. En particulier, il peut prendre connaissance des reminders. Toutefois, dans ce cas la question se pose la question de la mise à jour de l'agenda. D'une part, à moins d'effectuer des synchronisations journalières, les agendas implémentés sur l'appareil mobile et sur le serveur d'agenda ne concordent pas systématiquement. D'autre part, l'agenda implémenté dans l'appareil mobile ne peut être consulté que par le propriétaire de celui-ci. Il ne s'agit donc pas d'un agenda partagé.

Les inventeurs ont souhaité remédier à ces inconvénients en proposant un procédé de gestion d'agenda permettant de s'affranchir de la localisation d'un utilisateur.

A cet effet, l'invention propose, en premier lieu, un procédé de gestion d'un agenda électronique, qui comprend les opérations suivantes :
- prise en compte dans l'agenda d'un évènement préenregistré, comprenant des données d'agenda incluant au moins la date et le lieu prévus de l'évènement ;
- à la date prévue de l'évènement, localisation d'une unité sans fil affectée audit agenda ;
- comparaison de la localisation de l'unité sans fil avec le lieu prévu de l'évènement.

Ce procédé permet de suivre la réalisation de l'agenda par les personnes concernées, en s'affranchissant des contraintes liées à leur mobilité.

Une opération supplémentaire de modification des données d'agenda peut être prévue, en fonction de la localisation de l'unité sans fil, suivant que le lieu prévu et la localisation de l'unité sans fil concordent ou non.

Lorsque la localisation de l'unité sans fil et le lieu prévu de l'évènement ne concordent pas, le procédé peut comprendre une opération d'envoi à l'unité sans fil d'un message concernant l'évènement préenregistré, tel qu'un message de rappel, ou une requête concernant la réalisation de l'évènement et appelant une réponse de la part de l'unité sans fil.

Au contraire, lorsque la localisation du terminal mobile et le lieu prévu de l'évènement concordent, le procédé peut comprendre une opération de suppression dans l'agenda d'un rappel préétabli concernant cet évènement.

L'invention propose également, en second lieu, un système de gestion d'un agenda électronique, qui comprend :
- des moyens pour enregistrer un évènement comprenant des données d'agenda incluant au moins la date et le lieu prévus de l'évènement;
- des moyens pour localiser, à la date prévue d'un évènement, une unité sans fil affectée à l'agenda ;
- des moyens pour comparer la localisation de l'unité sans fil avec le lieu prévu de l'évènement.

Le système peut comprendre en outre des moyens pour modifier des données d'agenda en fonction de la localisation de l'unité sans fil.

Suivant un mode de réalisation :
- les moyens d'enregistrement sont implémentés sur un serveur d'agenda,
- les moyens de localisation sont implémentés sur un serveur de localisation, et
- les moyens de comparaison sont implémentés sur une passerelle reliant le serveur d'agenda et le serveur de localisation.

L'invention propose, en troisième lieu, un produit programme d'ordinateur comprenant :
- des instructions pour interroger un agenda électronique et en extraire, pour un évènement préenregistré, des données d'agenda incluant au moins la date et le lieu prévus de l'évènement,
- des instructions pour générer, à la date prévue une requête de localisation d'une unité sans fil associée à l'évènement,
- des instructions pour comparer la localisation de l'unité sans fil et le lieu prévu de l'évènement.

D'autres objets et avantages de l'invention apparaîtront à la lumière de la description faite ci-après en référence aux dessins annexés dans lesquels :
- la figure 1 est un schéma montrant de manière synthétique un système de gestion d'agenda selon l'invention ;
- les figures 2A et 2B sont des captures d'écran montrant l'affichage d'un évènement programmé dans un agenda électronique ;
- la figure 3 est une vue montrant un appareil mobile sur lequel sont affichés des messages sous forme de menu en provenance d'un serveur d'agenda distant ;

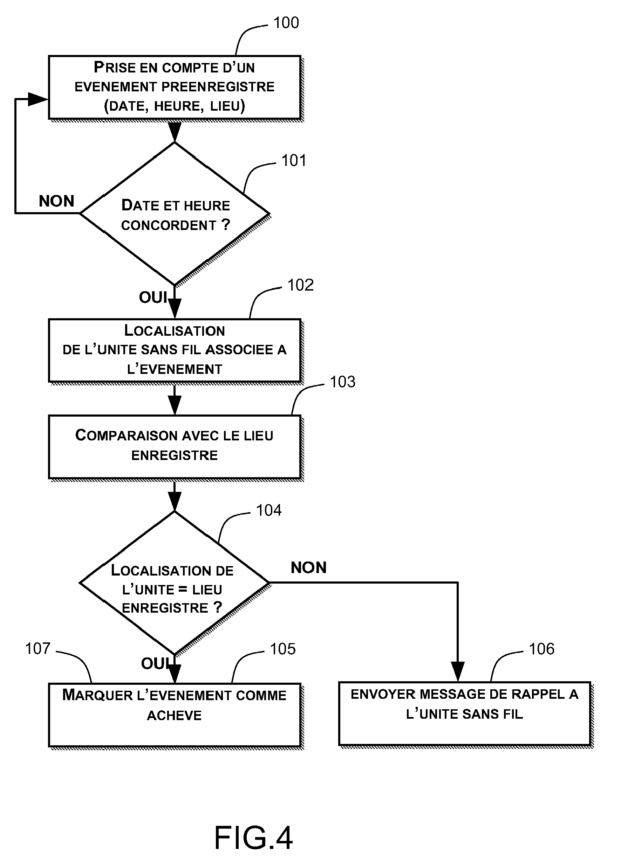

- la figure 4 est un schéma synoptique montrant plusieurs étapes d'un procédé de gestion d'agenda selon l'invention.

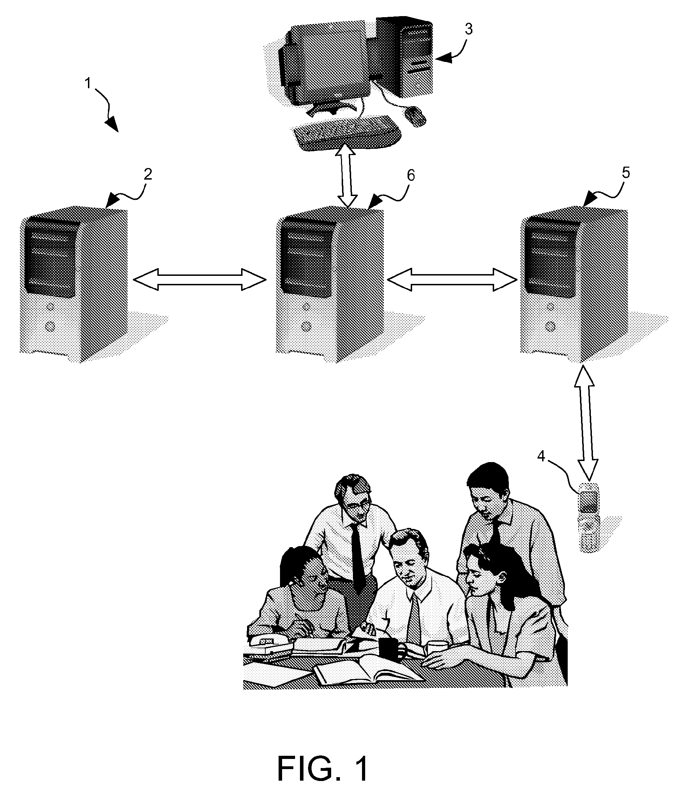

Sur la figure 1 est représenté un système **1** de gestion d'un ou plusieurs agendas électroniques. Ce système **1,** destiné à gérer des agendas partagés, se présente sous la forme d'un réseau comprenant un serveur d'agenda **2** sur lequel est implémenté en version serveur un outil logiciel incluant des fonctionnalités d'agenda (tel que Microsoft® Outlook®, Lotus® Notes®, etc.). Le réseau **1** comprend également des terminaux fixes 3 sur lesquels le même logiciel est implémenté en version client et à partir desquels les utilisateurs peuvent accéder à un agenda partagé en lecture seule, en écriture ou en lecture/écriture selon les droits paramétrés par l'administrateur réseau.

L'agenda inclut un nombre donné d'utilisateurs, chacun étant identifié par un ou plusieurs paramètres tels que Nom, Prénom, numéro de téléphone, adresse électronique, etc.

Le réseau **1** comprend également un ou plusieurs unités **4** sans fil, affectées à un ou plusieurs utilisateurs identifiés dans le serveur d'agenda **2.** Une unité sans fil **4** peut se présenter sous différentes formes. Il peut s'agir :
- d'un appareil mobile communiquant par voie hertzienne via un réseau métropolitain (MAN) ou mondial (WAN), tel qu'un téléphone cellulaire, un Smartphone ou un PDA communicant, et utilisant une technologie de communication connue telle que GSM, IS-95, IS-136, GPRS ou UMTS,
- d'un pager (c'est-à-dire d'un terminal portatif muni d'un écran sur lequel peuvent être affichés de courts messages émis par un service de radiomessagerie par voie hertzienne),
- d'un appareil mobile communicant via un réseau sans fil local (WLAN, wireless local area network) à faible portée, par exemple un ordinateur personnel (PC) portable ou un PDA muni de moyens de communication tels que Bluetooth® ou WiFi,
- ou encore, plus simplement, d'une étiquette (ou tag) d'identification par radiofréquence (plus connue sous l'acronyme anglais RFID, Radiofrequency Identification).

Quelle que soit le type d'unité sans fil retenu, on suppose qu'elle peut être localisée, au moins à un instant donné prédéterminé, mémorisé dans le serveur d'agenda **2.** La localisation peut être réalisée par toute technologie connue associée à la technologie de communication de l'unité sans fil. Ainsi, dans le cas d'un téléphone cellulaire, la localisation est réalisée par triangulation. Dans le cas d'un PC portable ou PDA Bluetooth® ou WiFi, ou encore d'un tag RFID, la localisation est réalisée par l'identification de l'émetteur-récepteur sans fil (point d'accès) le plus proche de l'unité sans fil, par lequel transitent les requêtes.

Le réseau **1** comprend également un serveur **5** de localisation sans fil, dans lequel sont mémorisés les numéros ou adresses de chaque unité sans fil **4.**

Dans le cas d'un réseau **1** local sans fil (WLAN), par exemple dans une configuration où les unités sans fil sont toutes localisées dans un bâtiment ou un groupe de bâtiments proches, la localisation des unités sans fil **4** peut être réalisée comme suit. Les points d'accès sans fil collectent des informations relatives à la puissance du signal sans fil reçu par les unités sans fil **4** (ces informations sont généralement identifiées par l'acronyme RSII, de l'anglais Received *Signal Strength Indication).* Ces informations sont transmises par les points d'accès en utilisant le protocole LWAPP (Ligntweight Access Point Protocol) à des contrôleurs WLAN qui retransmettent les informations au serveur de localisation **5** en utilisant le protocole SNMP (Simple Network Management Protocol). Le serveur **5** peut alors déduire de ces informations la position de l'unité sans fil **4** concernée. Le serveur de localisation **5** est de préférence équipé d'une interface de programmation (API, *Application Programming interface)* permettant de paramétrer la localisation suivant les besoins du réseau, comme nous allons le voir.

Le réseau **1** comprend un serveur **6** passerelle ou « cross serveur », relié au serveur d'agenda **2** d'une part, et au serveur de localisation **5** d'autre part, entre lesquels il forme un lien physique et logiciel servant notamment à traduire, comparer et synchroniser les données de ces deux serveurs **2, 5.** Suivant un mode de réalisation illustré sur la figure 1, le cross serveur **6** sert aussi d'interface de communication entre le serveur d'agenda **2** et les terminaux fixes **3,** qui lui sont reliés. Le cross serveur **6** est de préférence muni d'une API permettant de programmer les échanges de données avec le serveur d'agenda **2** et le serveur de localisation **5.**

Un certain nombre de lieux prédéfinis, tels que, dans le cas d'un réseau WLAN, des pièces d'un bâtiment munies de points d'accès sans fil, ou, dans le cas d'un réseau MAN ou WAN, des villes ou des quartiers, sont mémorisés à la fois dans le serveur d'agenda **2** et dans le serveur de localisation **5.** Dans le serveur d'agenda **2,** ces lieux sont identifiés par un nom ou des coordonnées. Dans le serveur de localisation **5,** ces lieux sont associés à une position sur un plan ou une carte présente en mémoire, tel que le plan d'un bâtiment ou une aire géographique élargie (plan d'une ville ou d'un quartier). Le cross serveur **5** est programmé pour faire le lien entre un lieu mémorisé dans le serveur d'agenda **2** et sa position sur le plan ou la carte mémorisé dans le serveur de localisation **5.**

Par exemple, dans le cas d'un réseau **1** WLAN limité à un bâtiment, le plan de celui-ci est mémorisé dans le serveur de localisation **5.** Des pièces du bâtiment, équipées de points d'accès sans fil, sont identifiées dans le serveur de localisation **5** par exemple par un doublet comprenant, d'une part, le nom de la pièce et, d'autre part, les coordonnées bi- ou tridimensionnelles de cette pièce sur le plan du bâtiment. Par hypothèse, chaque pièce comprend un nom unique, afin d'éviter les doublons et, par voie de conséquence, les erreurs de routage.

Le système **1** qui vient d'être décrit permet de mettre en oeuvre un procédé de gestion d'un agenda, que l'on décrit à présent.

On suppose qu'un évènement a été enregistré par au moins un utilisateur, par exemple depuis un terminal fixe, dans l'agenda au sein du serveur d'agenda **2.** Cet évènement comprend des données d'agenda qui incluent au moins la date et le lieu prévus de l'évènement. Le lieu est introduit dans l'agenda en respectant un formalisme permettant l'identification du lieu par le cross serveur **6** et la comparaison de ce lieu avec les localisations possibles des unités sans fils **4,** telles que mémorisées ou tout du moins identifiables au sein du serveur de localisation **5.**

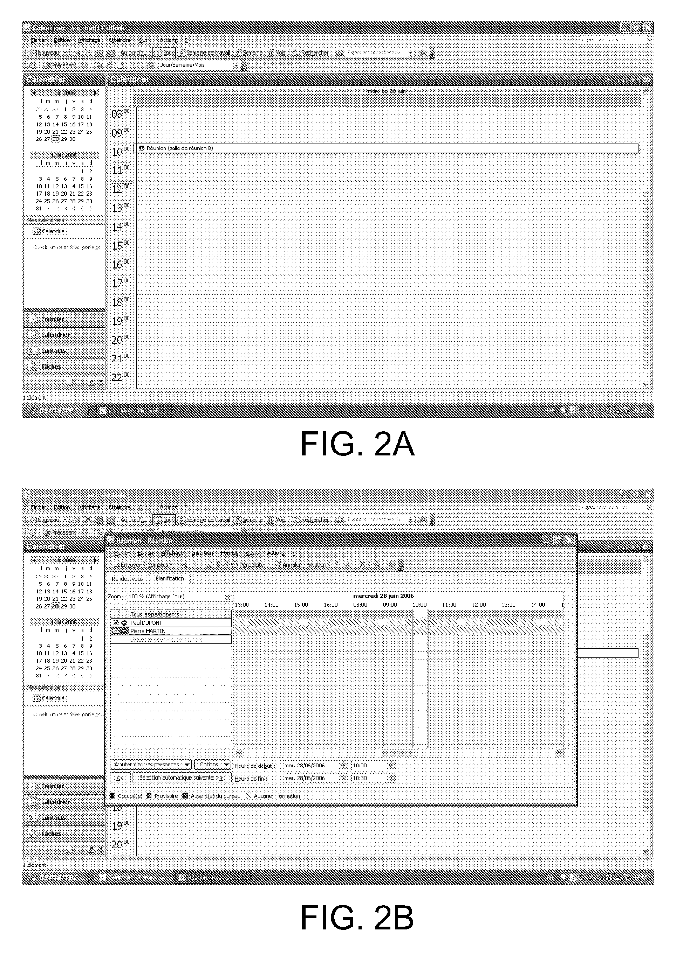

Par exemple, tel qu'illustré sur la figure 2A, un évènement nommé « réunion » est enregistré dans l'agenda. La date prévue est 28 juin 2006. L'heure prévue est 10h00. Le lieu prévu est « salle de réunion B ».

À l'évènement est associée au moins une unité sans fil **4,** dont l'identification est mémorisée dans le serveur de localisation **5.** Cette unité sans fil peut être identifiée directement dans le serveur d'agenda **2,** ou indirectement par un lien avec un utilisateur mémorisé comme donnée d'agenda dans l'évènement. Ainsi, l'agenda peut être programmé pour inclure par défaut, parmi les données d'agenda, l'identité de la personne associée au terminal sur lequel a été mémorisé l'évènement, tandis qu'au sein du serveur de localisation **5** est associée à cette personne une unité sans fil **4** donnée.

Par exemple, tel qu'illustré sur la figure 2B, deux personnes sont enregistrées comme participants à la réunion du 28 juin 2006 : Paul DUPONT et Paul MARTIN, à chacun desquels correspond une unité sans fil **4** identifiable dans le serveur de localisation.

Le système **1** est prévu pour vérifier la localisation des participants à un moment prédéterminé, de préférence au jour et à l'heure prévus de l'évènement.

Le serveur d'agenda **2** prend en compte **(100)** l'évènement préenregistré et, lorsque la date et éventuellement l'heure concordent avec la date et l'heure courantes **(101),** transmet au cross serveur **6** une requête visant à localiser les participants.

Le cross serveur **6** transmet une requête de localisation au serveur de localisation **5,** lequel identifie les unités sans fil **4** concernées, telles que mémorisées en son sein, et effectue les démarches en vue de les localiser via les éventuels intermédiaires tels que décrits ci-dessus (point d'accès sans fil, contrôleur WLAN).

Une fois les unités sans fil **5** localisées **(102),** le serveur de localisation **5** transmet les informations de localisation correspondantes au cross serveur **6,** lequel effectue la comparaison **(103)** avec le lieu prévu de l'évènement.

Dans l'exemple illustré sur les figures 2A et 2B, le cross serveur compare la localisation des unités sans fil **4** de MM. DUPONT et MARTIN avec la salle de réunion B, dans laquelle est censée se dérouler la réunion (tel qu'illustré sur la figure 1).

Plusieurs possibilités peuvent alors être envisagées selon que la localisation des unités sans fil **4** et le lieu enregistré dans l'agenda concordent ou non **(104),** et selon l'utilisation que l'on souhaite faire du système **1.**

### Localisation de l'unité sans fil et lieu enregistré concordent

Cela signifie que l'agenda est respecté.

Une première possibilité consiste à ne rien faire, l'évènement étant maintenu en mémoire dans le serveur d'agenda **2** pour les éventuels besoins ultérieurs d'un historique des évènements d'agenda passés.

Mais il est préférable, en fonction de la localisation de l'unité sans fil **4,** de modifier les données d'agenda.

Ainsi, une seconde possibilité consiste à marquer l'évènement comme achevé **(105),** ou à faire disparaître un rappel préenregistré, généré localement sur le serveur d'agenda **2.**

Une troisième possibilité consiste à supprimer l'évènement de l'agenda.

Une quatrième possibilité consiste à envoyer un message de données (notification) indiquant que le ou les participants se trouvent, à l'heure prévue, au lieu prévu. Cette notification peut être adressée non seulement aux participants pour les informer du respect de l'agenda (par exemple par SMS ou par génération, sur requête transmise par le cross serveur **6** via le serveur de localisation **5,** d'un message affiché sur un écran de l'unité sans fil **4),** mais également à destination d'autres personnes, la notification pouvant dans ce cas être adressée sur un terminal fixe **3** ou sur une unité sans fil **4,** sélectionnés comme destinataires de la notification lors de l'enregistrement de l'évènement (soit au cas par cas au choix de l'utilisateur à l'origine de l'enregistrement, soit de manière systématique par une programmation de l'agenda).

### Localisation de l'unité sans fil et lieu enregistré ne concordent pas

Cela signifie que l'agenda n'est pas respecté.

Une première possibilité consiste à transmettre une notification à l'utilisateur, tel qu'un rappel de l'évènement **(106),** de préférence accompagné du lieu prévu.

Lorsque l'unité sans fil **4** est munie de moyens d'affichage, il est possible de transmettre la notification directement à l'unité sans fil **4.**

Dans l'hypothèse par contre où l'unité sans fil **4** est un tag RFID, sans possibilité d'affichage ou d'autres notifications à destination de l'utilisateur, le cross serveur **6** peut être programmé pour sélectionner, via le serveur de localisation **5,** un terminal proche de l'unité sans fil **4** (terminal messager), auquel est transmise la notification.

Cette notification peut générer sur un écran **7** de l'unité sans fil **4** (ou du terminal messager) l'apparition d'un menu **8** proposant à l'utilisateur une pluralité de réponses **8.1, 8.2, 8.3,** correspondant à des situations prédéfinies justifiant de - ou destinées à remédier à - la non concordance entre le lieu prévu et la localisation de l'unité sans fil 5. La possibilité peut être donnée à l'utilisateur de mettre à jour, supprimer, ou plus généralement modifier (par exemple en prolongeant sa durée) l'évènement.

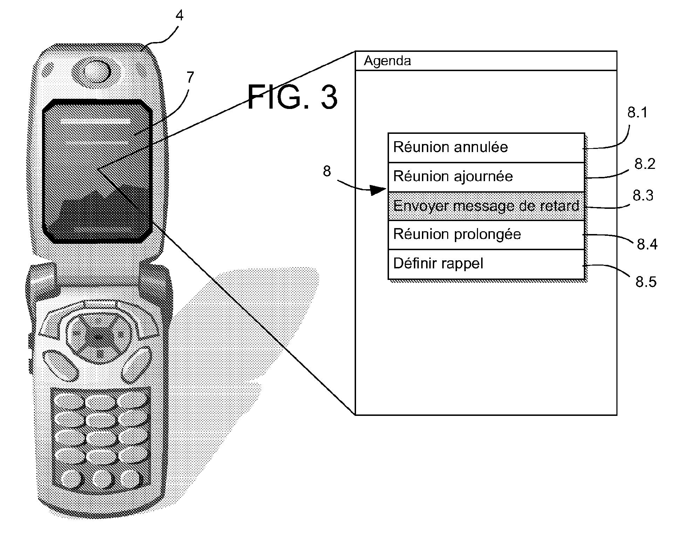

Dans l'exemple de la réunion décrit ci-dessus et illustré sur les figures 2A et 2B, il est ainsi possible de faire afficher sur l'écran 7 de l'unité sans fil **4** (tel qu'un Smartphone, comme illustré sur la figure 3) un menu **8** comprenant une sélection de réponses possibles, telles que « réunion annulée », « réunion ajournée » ou encore « envoyer un message de retard ». Une fois la réponse sélectionnée par l'utilisateur et transmise au cross serveur **6,** celui-ci prend les mesures prédéfinies correspondant à la situation. Dans le cas d'annulation par exemple, le cross serveur **6** peut, par exemple, transmettre une notification d'annulation aux autres participants, marquer dans l'agenda l'évènement comme annulé ou encore supprimer l'évènement de l'agenda. En cas de retard, le cross serveur **6** peut transmettre aux autres participants un message les informant du retard du participant concerné.

### Autres cas

Le système **1** peut être programmé pour vérifier le bon déroulement de l'évènement. Dans l'hypothèse où l'évènement (tel qu'une réunion) est supposé se terminer à une heure définie figurant parmi les données d'agenda enregistrées, il est ainsi possible de vérifier à nouveau la localisation d'un ou plusieurs participants.

Comme décrit ci-dessus, il est envisageable de transmettre à l'unité sans fil une notification telle qu'un rappel de l'heure de fin, ou une requête appelant une réponse.

Ainsi, dans l'hypothèse où après l'heure de fin prévue de l'évènement l'unité sans fil **4** associée à l'évènement se trouve toujours au lieu prévu, ce qui signifie que la durée de l'évènement n'est pas respectée, il est possible de faire afficher sur l'écran **7** de l'unité sans fil **4** (ou sur l'écran d'un terminal voisin si l'unité sans fil **4** n'est pas munie d'une interface graphique) un menu 8 comprenant une sélection de réponses possibles **8.4, 8.5,** tels que « réunion en cours » ou « définir un rappel ». Le cross serveur **6,** en fonction de la réponse sélectionnée, prend les mesures prédéfinies correspondant à la situation, par exemple en décalant l'heure prévue de fin de l'évènement et/ou en définissant un nouveau rappel à transmettre à l'unité sans fil **4.**

Les opérations décrites ci-dessus sont réalisées par programmation des API du cross serveur **6,** du serveur d'agenda **2** et du serveur de localisation **5**.

En particulier, l'API du cross serveur **6** inclut au moins les instructions suivantes:
- interrogation de l'agenda électronique et extraction, pour un évènement préenregistré, des données d'agenda incluant au moins la date et le lieu prévus de l'évènement,
- génération, à la date prévue, d'une requête de localisation d'au moins une unité sans fil **4** associée à l'évènement (cette requête étant transmise au serveur de localisation), et
- comparaison de la localisation de l'unité sans fil **4** et du lieu prévu de l'évènement.

L'API du cross serveur **6** peut également inclure des instructions pour générer un rapport de suivi de l'évènement, comprenant la localisation du ou de chaque unité sans fil **4** concernée, et l'échange de communications entre le cross serveur **4** et l'unité sans fil **4.**

## Revendications

1. Procédé de gestion d'un agenda électronique, qui comprend les opérations suivantes :
- prise en compte dans l'agenda d'un évènement préenregistré, comprenant des données d'agenda incluant au moins la date et le lieu prévus de l'évènement;
- à la date prévue de l'évènement, localisation d'une unité sans fil affectée audit agenda ;
- comparaison de la localisation de l'unité sans fil avec le lieu prévu de l'évènement.

2. Procédé de gestion selon la revendication 1, qui comprend une opération de modification des données d'agenda en fonction de la localisation de l'unité sans fil.

3. Procédé de gestion selon la revendication 1, qui comprend, lorsque la localisation de l'unité sans fil et le lieu prévu de l'évènement ne concordent pas, l'envoi à l'unité sans fil d'un message concernant l'évènement préenregistré.

4. Procédé de gestion selon la revendication 1, dans lequel le message est un message de rappel.

5. Procédé de gestion selon la revendication 2, dans lequel le message est une requête concernant la réalisation de l'évènement et appelant une réponse de la part de l'unité sans fil.

6. Procédé de gestion selon la revendication 1, qui comprend, lorsque la localisation du terminal mobile et le lieu prévu de l'évènement concordent, une opération de suppression dans l'agenda d'un rappel préétabli concernant cet évènement.

7. Système **(1)** de gestion d'un agenda électronique, qui comprend :
- des moyens pour enregistrer un évènement comprenant des données d'agenda incluant au moins la date et le lieu prévus de l'évènement ;
- des moyens pour localiser, à la date prévue d'un évènement, une unité sans fil **(4)** affectée à l'agenda;
- des moyens pour comparer la localisation de l'unité sans fil **(4)** avec le lieu prévu de l'évènement.

8. Système **(1)** selon la revendication 7, qui comprend des moyens pour modifier des données d'agenda en fonction de la localisation de l'unité sans fil **(4).**

9. Système **(1)** selon la revendication 7 ou 8, dans lequel
- les moyens d'enregistrement sont implémentés sur un serveur d'agenda **(2),**
- les moyens de localisation sont implémentés sur un serveur de localisation **(5),** et
- les moyens de comparaison sont implémentés sur une passerelle **(6)** reliant le serveur d'agenda **(2)** et le serveur de localisation **(5).**

10. Produit programme d'ordinateur comprenant :
- des instructions pour interroger un agenda électronique et en extraire, pour un évènement préenregistré, des données d'agenda incluant au moins la date et le lieu prévus de l'évènement,
- des instructions pour générer, à la date prévue une requête de localisation d'une unité sans fil **(4)** associée à l'évènement,
- des instructions pour comparer la localisation de l'unité sans fil **(4)** et le lieu prévu de l'évènement.
